# EUROPÄISCHE PATENTSCHRIFT

(11) **EP 0 961 815 B1**
(45) Veröffentlichungstag und Bekanntmachung des Hinweises auf die Patenterteilung: **07.05.2003**
(21) Anmeldenummer: 98912320.3
(22) Anmeldetag: 17.02.1998
(51) Int. Cl.: C09D 9/04, C08J 11/10

(54) **POLYURETHANSCHAUMENTFERNER FÜR VERSCHIEDENE UNTERGRÜNDE**
POLYURETHANE FOAM REMOVER FOR DIFFERENT BACKGROUND MATERIALS
DECAPANT DE POLYURETHANE EN MOUSSE POUR DIFFERENTS MATERIAUX DE BASE

(30) Priorität: 18.02.1997 DE 29702814 U; 14.05.1997 DE 29708551 U; 22.05.1997 DE 29708976 U; 25.07.1997 DE 19732378
(43) Veröffentlichungstag der Anmeldung: 08.12.1999
(73) Patentinhaber: Oeffner, Kristian, 38104 Braunschweig (DE)
(72) Erfinder: Oeffner, Kristian, 38104 Braunschweig (DE)
(74) Vertreter: Einsel, Martin, Dipl.-Phys.
(86) Internationale Anmeldenummer: EP9800904
(87) Internationale Veröffentlichungsnummer: WO98037156

(56) Entgegenhaltungen:
- EP-A- 0 021 149
- EP-A- 0 524 826
- DE-U- 29 708 976
- US-A- 4 744 834
- US-A- 4 764 222
- DATABASE WPI Week 7722 Derwent Publications Ltd., London, GB; AN 38181y XP002071268 "remove polyurethane residue apparatus solvent" & CA 1 010 739 A (GAF)

## Beschreibung

Die Erfindung betrifft einen Polyurethanschaumentferner für verschiedene Untergrundmaterialien sowie dessen Verwendung zum Reinigen verschiedener Untergrundmaterialien.

Polyurethanschäume entstehen bei der Polyaddition, sofern Wasser und/oder Carbonsäuren zugegen sind. Diese reagieren nämlich mit den vorhandenen Isocyanaten unter Abspaltung von auftreibend und schaumbildend wirkendem Kohlendioxid.

Bei der Verarbeitung von Polyurethan (PU)-Montageschäumen ist es durch die starke Ausdehnung und das Tropfen des Montageschaumes teilweise nicht zu vermeiden, daß mit dem Montageschaum eingebaute Gegenstände mit PU-Montageschaum verschmutzt werden. Ein anschließendes Entfernen der bereits ausgehärteten PU-Montageschäume erweist sich als sehr problematisch. Der Grund dafür liegt darin, daß die Montageschäume zu mehr oder minder stark vernetzten Polymeren aushärten, die als konstitutionelle Repetiereinheit aus Monomeren entstehen. Solange PU als Monomer vorliegt, ist es löslich. Polymere sind dagegen in Lösungsmitteln nicht löslich, nur quellbar. Es erweist sich daher als Problem, die ausgehärteten PU-Schaumverschmutzungen wieder zu entfernen, ohne den Untergrund, auf dem sie haften, zu beschädigen.

Das Problem wird dadurch erschwert, daß viele Lösungsmittelsysteme, die PU-Schäume mehr oder weniger gut quellen, verschiedene Untergrundmaterialien dagegen sehr gut lösen. Dies bedeutet, daß der Untergrund zerstört wird, bevor der PU-Schaum quillt oder weich wird.

Der Erfindung liegt daher die Aufgabe zugrunde, einen Polyurethanschaumentferner für verschiedene Untergrundmaterialien zu schaffen, der möglichst gut Polyurethanschaum quellen, nicht jedoch das Untergrundmaterial bzw. sehr empfindliche Beschichtungen auf diesem lösen oder zerstören kann.

Die Aufgabe wird nach dem Oberbegriff des Anspruchs 1 dadurch gelöst, daß der Polyurethanschaumentferner aus einem γ-Lacton mit einem Gewichtsanteil von 20 bis 80 % und/oder einer Verbindung aus dem γ-Lacton und Methylamin mit einem Gesamtgewichtsanteil der Verbindung von 20 bis 80 % und einem Diethylenglycolether oder Diglycolmonoether oder Diacetonalkohol und einem nichtionischen Tensid zum Emulgieren mit einem Gewichtsanteil von 1 bis 8 % und einem Dickmacher zur Viskositätserhöhung mit einem Gewichtsanteil von 0,1 bis 1 % oder aus einem Aminoalkohol mit einem Gewichtsanteil von 2 bis 75 % und einem Diethylenglycolmonoether oder Ethylenglycolmonoether und einem Dickmacher zur Viskositätserhöhung mit einem Gewichtsanteil von 0,1 bis 1 % besteht. Weiterbildungen der Erfindung sind in den Unteransprüchen definiert.

Dadurch wird erstmals ein Polyurethanschaumentferner geschaffen, der in einer ersten Zusammensetzung beispielsweise Fensterrahmenmaterialien, wie PVC, Eloxal oder folienbeschichtetes PVC oder in anderer Zusammensetzung beschichtetes Aluminium oder Eloxal sehr gut reinigen kann, ohne diese anzugreifen. Da es bislang nur möglich war, nicht ausgehärtete PU-Schäume zu entfernen, liegt in dem Auffinden solch einer Mischung, die auch bereits ausgehärteten Polyurethanschaum entfernen kann, eine besonders vorteilhafte Lösung. Beispielsweise beim Fenstereinbau wird der Rahmen während des Einbaus verschmutzt. Handwerker werden sich jedoch nicht die Zeit nehmen, den noch feuchten Schaum vom Rahmen zu entfernen. Dieser trocknet dort an und härtet aus. Mit bekannten Entfernern läßt er sich nur unter Beschädigung des Rahmenmaterials entfernen, chemisch im nicht ausgehärteten Zustand oder mechanisch im ausgehärteten.

Es wird ein Polyurethanschaumentferner geschaffen, mittels dessen auch unter besonders ungünstigen Bedingungen, wie z.B. besonders stark vernetzte Polyurethanmontageschäume auf relativ lösungsmittelempfindlichen Beschichtungsmaterialien auf Aluminiumprofilen, eine sehr gute Reinigung des beschichteten Aluminiums als Untergrundmaterial ermöglicht wird. Eine Beeinträchtigung der sehr empfindlichen Beschichtung des Aluminiums tritt daher nicht mehr auf. Darüberhinaus eignet sich der Polyurethanschaumentferner ebenfalls sehr gut für Untergrundmaterialien aus Polyvinylchlorid. Polyvinylchlorid wird von dem Polyurethanschaumentferner ebenfalls nicht angegriffen. Dennoch werden sehr gute Reinigungsergebnisse auch bei diesem Untergrundmaterial erzielt. Mit dem erfindungsgemäßen Polyurethanschaumentferner für insbesondere beschichtetes Aluminium wird daher ein einerseits nicht aggressives, andererseits aber sehr wirksames Reinigungsmittel für ausgehärtete Polyurethanschäume geschaffen.

Außerdem kann der Polyurethanschaumentferner vorteilhaft an die unterschiedlichsten Untergrundmaterialien angepaßt werden. Zumeist wird bei den bekannten Polyurethanschaumentfernern zumindest PVC angegriffen.

Besonders bevorzugt wird als γ-Lacton für Untergrundmaterialien wie PVC, folienbeschichtetes PVC oder Eloxal ein γ-Butyrolacton vorgesehen. Für Untergrundmaterialien wie beschichtetes Aluminium oder Eloxal wird vorzugsweise N-Methylpyrrolidon verwendet. Das N-Methylpyrrolidon wird gebildet als Verbindung aus γ-Butyrolacton und Methylamin.

γ-Butyrolacton ist ein seltenes Lösungsmittel. N-Methylpyrrolidon ist bekannt als Quellmittel für Polyurethan. Beide Materialien sind biologisch gut abbaubar, da sie aus 4-Hydroxybuttersäure gewonnen werden. In der Verbindung kann entweder jeder dieser beiden Stoffe allein oder aber beide zusammen vorgesehen sein.

N-Methylpyrrolidon allein würde jedoch eine Aluminiumbeschichtung zerstören. Aus diesem Grunde wird vorteilhaft bei den erfindungsgemäßen Ausführungsformen als weitere Substanz in der Verbindung Diethylenglycolmonomethylether verwendet. Dieser Stoff ist ein Diethylenglycolether oder Diglycolmonoether. Alternativ kann auch ein Triethylenglycolmonomethylether oder Diethylenglycolmonoethylether oder Diethylenglycolmonopropylether oder Diethylenglycolmonobutylether verwendet werden. Auch wäre die Verwendung von Diacetonalkohol möglich. Allerdings erweist sich die Verwendung von Diacetonalkohol als vergleichsweise schlechter, da sie eventuell ein nicht lagerstabiles Produkt ergibt. Diacetonalkohol ist ein bekanntes Lösungsmittel unter anderem für Harze und Lacke.

Diethylenglycolmonomethylether ist ein Lösungsmittel und weist quellende Eigenschaften von Polyurethanschaum auf. Es mildert die Quellwirkung auf die zu reinigende Beschichtung des Untergrundes. Die alternative Verwendung von Dialkylethern anstelle von Diethylenglycolmonomethylether oder verwandten Alkoholethern wäre zu schwach. Diethylenglycolmonomethylether ist mit verschiedenen Stoffen, nicht jedoch mit Ölen oder Kohlenwasserstoffen mischbar.

Der zu verwendende Gewichtsanteil des Diglycolmonoethers wird in Abhängigkeit von den übrigen Stoffanteilen gewählt. In einer ersten Ausführungsform wird ein Gewichtsanteil von z. B. 38 %, in einer zweiten Ausführungsform ein Gewichtsanteil von z.B. 38 bis 33 % verwendet.

Es hat sich gezeigt, daß ein Diethylenglycolmonoether oder auch ein Ethylenglycolmonoether die Beschichtung von Aluminium nicht, den Polyurethanschaum auch nur mäßig quillt. Dies ist jedoch für das Entfernen der Polyurethanschaumschicht nicht ausreichend. Es sollte daher eine Substanz gefunden werden, die zusammen mit dem Diethylenglycolmonoether oder Ethylenglycolmonoether Polyurethanschäume besser quellen kann als der Diethylenglycolmonoether oder Ethylenglycolmonoether für sich allein genommen. Darüberhinaus sollte die entsprechende Substanz gegenüber einer sehr empfindlichen Beschichtung von Aluminium ein wesentlich geringeres Quellvermögen zeigen als beispielsweise N-Methylpyrrolidon, um diese nicht anzugreifen.

Es hat sich gezeigt, daß Aminoalkohole Substanzen sind, die die vorgenannten Kriterien und Eigenschaften erfüllen bzw. aufweisen. Gegenüber ausgehärteten Polyurethanschäumen zeigen sie einerseits die erforderliche Quellwirkung, greifen andererseits jedoch die Beschichtung von Aluminium nicht an. Als besonders bemerkenswert hat sich dabei erwiesen, daß die Aminoalkohole für sich allein genommen Polyurethanschäume nur schwach und für ein Entfernen derer nicht ausreichend quellen. Die Mischung aber aus einem Diethylenglycolmonoether und Aminoalkohol oder einem Ethylenglycolmonoether und Aminoalkohol führt zu einer solchen Erweichung der Polyurethanschäume, daß sich sogar die lackartige, sehr harte Grundschicht der Polyurethanschaumverschmutzung entfernen läßt, ohne die darunter befindliche sehr empfindliche Beschichtung des Aluminiums zu beeinträchtigen.

Besonders bevorzugt wird bei dieser Ausführungsform des Polyurethanschaumentferners als Diethylenglycolmonoether Diethylenglycolmonomethylether oder Diethylenglycolmonobutylether oder Diethylenglycolmonoethylether verwendet. Diethylenglycolmonoether sind Lösungsmittel, die quellende Eigenschaften auf Polyurethanschaum aufweisen. Sie mildern die Quellwirkung auf die zu reinigende Beschichtung des Untergrundes, insbesondere des Aluminiums. Diethylenglycolmonoether sind mit verschiedenen Stoffen, nicht jedoch mit Ölen oder Kohlenwasserstoffen mischbar. Der zu verwendende Gewichtsanteil des Diethylenglycolmonoethers wird in Abhängigkeit von den übrigen Stoffanteilen gewählt.

Vorzugsweise sind die Ethylenglycolmonoether Ethylenglycolmonomethylether oder Ethylenglycolmonoethylether oder Ethylenglycolmonobutylether. Diese Substanzen zeigen ähnliche Eigenschaften wie die Diethylenglycolmonoether und werden ebenfalls hinsichtlich des zu verwendenden Gewichtsanteils in Abhängigkeit von den übrigen Stoffanteilen gewählt.

Besonders bevorzugt wird als Aminoalkohol Ethanolamin oder Diglycolamin oder Diethanolamin oder 2-(N-Methylamino)ethanol verwendet. Möglich ist darüberhinaus die Verwendung von Isopropanolamin oder Morpholin oder 2-(2-Aminoethylamino)ethanol vorzusehen.

Ethanolamine oder Aminoethanole dienen im allgemeinen als Fettsäurederivate für Detergentien oder auch zur Gasreinigung. Diethanolamine sind als Weichhaltemittel bekannt und zur Herstellung von technischen Emulsionen.

Anstelle von Ethanolaminen, Diglycolamin, Diethanolamin oder 2-(N-Methylamino)ethanol können auch Isopropanolamin oder Morpholin oder 2-(2-Aminoethylamino)ethanol verwendet werden. Isopropanolamin ist dabei als Lösungsvermittler bekannt, 2-(2-Aminoethylamino)ethanol zeigt im Zweifel ähnliche Eigenschaften wie Diethanolamin. Morpholin entsteht aus Diethanolamin und ist als Katalysator für die Polyurethanproduktion bekannt.

Als weiterer Stoff wird bei einer anderen Ausführungsform des Polyurethanschaumentferners ein nichtionisches Tensid zum Emulgieren, besonders bevorzugt Polyoxyethylen Glycerol Oleoricinoleat mit 20 Molekülen Ethylenoxid pro Molekül verwendet. Dieses nichtionische Tensid ist vorgesehen, damit das Polyurethan nach dem Quellen nicht wieder an dem Untergrundmaterial festbackt. Es begünstigt die Dispersion, also das Bilden eines Systems aus mehreren Phasen, von denen eine kontinuierlich und mindestens eine weitere fein verteilt ist. Ein Polyoxyethylen ist eine Verbindung, welche auf Ethylenoxid basiert. Ethylenoxid ist eine Schlüsselsubstanz für eine Vielzahl weiterer Zwischen- und Endprodukte. Es neigt zu stark exothermen Reaktionen. Beispielsweise reagiert es auch mit Fettsäuren, welche zusammengefaßt sind in der Oleochemie. Die Ricinoleate sind Metallseifen der Ricinolsäure, welche bei der Verwendung u.a. in Schmiermitteln bekannt sind.

Ein solches Polyoxyethylen Glycerol Oleoricinoleat kann beispielsweise von der Firma Th. Goldschmidt AG erworben werden.

Als weiterer Stoff wird ein Dickmacher, besonders bevorzugt Hydroxypropylcellulose verwendet. Ein solcher Dickmacher ist als Agens zur Viskositätserhöhung erforderlich. Dadurch wird das Endprodukt beispielsweise an einem Fensterrahmen verwendbar. Es zerfließt nicht und läßt sich gut handhaben. Hydroxypropylcellulose ist ein thermoplastisches Granulat. Es ist löslich in kaltem Wasser und polaren organischen Lösungsmitteln.

Es erweist sich als vorteilhaft, das γ-Lacton möglichst in einem Massenprozentbereich von 20 bis 80 %, das nichtionische Tensid möglichst in einem Bereich von 1 bis 8 % und den Dickmacher möglichst in einem Bereich von 0,1 bis 1 % zu wählen. Die erforderliche Prozentzahl des Diglycolmonoethers ergibt sich dann aus der Differenz zu 100 %.

Es erweist sich alternativ als vorteilhaft, den Aminoalkohol möglichst in einem Massenprozentbereich von 2 bis 75 % und den Dickmacher möglichst in einem Bereich von 0,1 bis 1 % zu wählen. Die erforderliche Prozentzahl des Diethylenglycolmonoethers oder des Ethylenglycolmonoethers ergibt sich dann aus der Differenz zu 100 %.

Besonders gute Ergebnisse werden bei Kombination von Diethylenglycolmonomethylether oder Diethylenglycolmonobutylether oder Diethylenglycolmonoethylether oder alternativ Ethylenglycolmonomethylether oder Ethylenglycolmonoethylether oder Ethylenglycolmonobutylether und Ethanolamin oder Diglycolamin oder Diethanolamin oder 2-(N-Methylamino)ethanol erzielt, wobei natürlich jeweils der Dickmacher hinzukommt.

Im folgenden werden Ausführungsbeispiele der Erfindung näher beschrieben:

### 1. Beispiel

Bei Verwendung eines Polyurethanschaumentferners für die Untergrundmaterialien PVC, folienbeschichtes PVC und Eloxal (elektrisch oxidiertes Aluminium) werden 58,0 % γ-Butyrolacton, 38,0 % Diethylenglycolmonomethylether und 4,0 % Polyoxyethylen Glycerol Oleoricinoleat (mit 20 Molekülen Ethylenoxid pro Molekül) gemischt und 0,65 % Hydroxypropylcellulose darin gelöst.

### 2. Beispiel

Bei Verwendung eines Polyurethanschaumentferners für Untergrundmaterialien wie beschichtetes Aluminium und Eloxal werden 58,0 bis 63,0 % N-Metylpyrrolidon, 38,0 bis 33,0 % Diethylenglycolmonomethylether und 4,0 % Polyoxyethylen Glycerol Oleoricinoleat (mit 20 Molekülen Ethylenoxid pro Molekül) gemischt und 0,65 % Hydroxypropylcellulose darin gelöst.

### 3. Beispiel

Bei Verwendung eines Polyurethanschaumentferners für beschichtetes Aluminium werden 25 % Ethanolamin und 74,15 % Diethylenglycolmonomethylether, auch Methyldiglycol genannt, gemischt und 0,85 % Hydroxypropylcellulose mit einer Molmase von ca. 1 100 000 g/mol darin gelöst. Eine solche Hydroxypropylcellulose wird beispielsweise unter der Marke "KLUCEL H" von der Hercules Aqualon Inc. angeboten.

Mit dieser Rezeptur kann auch Polyvinylchlorid als Untergrundmaterial sehr gut gereinigt werden, ohne daß der Polyurethanschaumentferner in der beschriebenen Mischungszusammensetzung das Polyvinylchlorid angreift.

## Patentansprüche

1. Polyurethanschaumentferner für verschiedene Untergrundmaterialien,
**dadurch gekennzeichnet,**
**daß** der Polyurethanschaumentferner aus einem γ-Lacton mit einem Gewichtsanteil von 20 bis 80 % und/oder einer Verbindung aus dem γ-Lacton und Methylamin mit einem Gesamtgewichtsanteil der Verbindung von 20 bis 80 % und
einem Diethylenglycolether oder Diglycolmonoether oder Diacetonalkohol und einem nichtionischen Tensid zum Emulgieren mit einem Gewichtsanteil von 1 bis 8 % und
einem Dickmacher zur Viskositätserhöhung mit einem Gewichtsanteil von 0,1 bis 1 % oder
aus einem Aminoalkohol mit einem Gewichtsanteil von 2 bis 75 % und
einem Diethylenglycolmonoether oder Ethylenglycolmonoether und
einem Dickmacher zur Viskositätserhöhung mit einem Gewichtsanteil von 0,1 bis 1 % besteht.

2. Polyurethanschaumentferner nach Anspruch 1,
**dadurch gekennzeichnet,**
**daß** als γ-Lacton γ-Butyrolacton vorgesehen ist.

3. Polyurethanschaumentferner nach Anspruch 1 oder 2,
**dadurch gekennzeichnet,**
**daß** die Verbindung aus dem γ-Lacton und Methylamin N-Methylpyrrolidon ist.

4. Polyurethanschaumentferner nach Anspruch 1,
**dadurch gekennzeichnet,**
**daß** als Aminoalkohol Ethanolamin, Diglycolamin, Diethanolamin oder 2-(N-Methylamino)ethanol vorgesehen ist.

5. Polyurethanschaumentferner nach Anspruch 1,
**dadurch gekennzeichnet,**
**daß** als Aminoalkohol Isopropanolamin oder Morpholin oder 2-(2-Aminoethylamino)ethanol vorgesehen ist.

6. Polyurethanschaumentferner nach einem der Ansprüche 1 bis 5,
**dadurch gekennzeichnet,**
**daß** als Diglycolmonoether bzw. Diethylenglycolmonoether Diethylenglycolmonomethylether oder Diethylenglycolmonoethylether oder Diethylenglycolmonopropylether oder Diethylenglycolmonobutylether vorgesehen ist.

7. Polyurethanschaumentferner nach einem der Ansprüche 1 bis 3 oder 6,
**dadurch gekennzeichnet,**
**daß** das nichtionische Tensid zum Emulgieren Polyoxyethylen Glycerol Oleoricinoleat mit 20 Molekülen Ethylenoxid pro Molekül ist.

8. Polyurethanschaumentferner nach Anspruch 1 oder 4 bis 6,
**dadurch gekennzeichnet,**
**daß** als Ethylenglycolmonoether Ethylenglycolmonomethylether oder Ethylenglycolmonoethylether oder Ethylenglycolmonobutylether vorgesehen ist.

9. Polyurethanschaumentferner nach einem der vorhergehenden Ansprüche,
**dadurch gekennzeichnet,**
**daß** der Dickmacher Hydroxypropylcellulose ist.

10. Verwendung eines Polyurethanschaumentferners nach einem der Ansprüche 1 bis 3, 6, 7 oder 9 für ein Untergrundmaterial aus PVC, folienbeschichtetem PVC oder Eloxal,
**dadurch gekennzeichnet,**
**daß** der Polyurethanschaumentferner ein γ-Lacton mit einem Gewichtsanteil von 20 - 80 %, einen Diethylenglycolether oder Diglycolmonoether oder Diacetonalkohol, ein nichtionisches Tensid zum Emulgieren mit einem Gewichtsanteil von 1 bis 8 % und einen Dickmacher zur Viskositätserhöhung mit einem Gewichtsanteil von 0,1 bis 1 % enthält.

11. Verwendung eines Polyurethanschaumentferners nach Anspruch 10,
**dadurch gekennzeichnet,**
**daß** der Polyurethanschaumentferner 58 % γ-Butyrolacton, 38 % Diethylenglycolmonomethylether, 4 % Polyoxyethylen Glycerol Oleoricinoleat und 0,65 % Hydroxypropylcellulose enthält.

12. Verwendung eines Polyurethanschaumentferners nach einem der Ansprüche 1 bis 3, 6, 7 oder 9 für Untergrundmaterialien aus beschichtetem Aluminium oder Eloxal,
**dadurch gekennzeichnet,**
**daß** der Polyurethanschaumentferner eine Verbindung aus einem γ-Lacton und Methylamin mit einem Gewichtsanteil der Verbindung von 20 bis 80 %, einen Diethylenglycolether oder Diglycolmonoether oder Diacetonalkohol, ein nichtisotonisches Tensid zum Emulgieren mit einem Gewichtsanteil von 1 bis 8 % und einen Dickmacher zur Viskositätserhöhung mit einem Gewichtsanteil von 0,1 bis 1 % enthält.

13. Verwendung eines Polyurethanschaumentferners nach Anspruch 12,
**dadurch gekennzeichnet,**
**daß** der Polyurethanschaumentferner 58 bis 63 % N-Methylpyrrolidon, 38 bis 33 % Diethylenglycolmonomethylether, 4 % Polyoxyethylen Glycerol Oleoricinoleat und 0,65 % Hydroxypropylcellulose enthält.

14. Verwendung eines Polyurethanschaumentferners nach einem der Ansprüche 1,4 bis 6,8 oder 9 für Untergrundmaterialien aus beschichtetem Aluminium,
**dadurch gekennzeichnet,**
**daß** der Polyurethanschaumentferner einen Aminoalkohol mit einem Gewichtsanteil von 2 bis 75 %, einen Diethylenglycolmonoether oder Ethylenglycolmonoether und einen Dickmacher zur Viskositätserhöhung mit einem Gewichtsanteil von 0,1 bis 1 % enthält.

15. Verwendung eines Polyurethanschaumentferners nach Anspruch 14,
**dadurch gekennzeichnet,**
**daß** der Polyurethanschaumentferner 25 % Ethanolamin, 74,15 % Diethylenglycolmonomethylether und 0,85 % Hydroxypropylcellulose enthält.

## Claims

1. Polyurethane foam remover for different substrate materials, **characterised in that** the polyurethane foam remover is composed of a γ-lactone with a percentage by weight of 20 to 80% and/or of a compound composed of the γ-lactone and methylamine with a total percentage by weight of the compound of 20 to 80%, and a diethylene glycol ether or diglycol monoether or diacetone alcohol and a non-ionic surfactant for emulsification with a percentage by weight of 1 to 8%, and a thickening agent to increase viscosity with a percentage by weight of 0.1 to 1%, or of an amino alcohol with a percentage by weight of 2 to 75% and a diethylene glycol monoether or ethylene glycol monoether and a thickening agent to increase viscosity with a percentage by weight of 0.1 to 1%.

2. Polyurethane foam remover according to Claim 1, **characterised in that** γ-butyrolactone is provided as γ-lactone.

3. Polyurethane foam remover according to Claim 1 or 2, **characterised in that** the compound comprises γ-lactone and methylamine N-methylpyrrolidone.

4. Polyurethane foam remover according to Claim 1, **characterised in that** ethanolamine, diglycolamine, diethanolamine or 2-(N-methylamino)ethanol is provided as amino alcohol.

5. Polyurethane foam remover according to Claim 1, **characterised in that** isopropanolamine or morpholine or 2-(2-amino-ethylamino)ethanol is provided as amino alcohol.

6. Polyurethane foam remover according to one of Claims 1 to 5, **characterised in that** diethylene glycol monomethyl ether or diethylene glycol monoethyl ether or diethylene glycol monopropyl ether or diethylene glycol monobutyl ether is provided as diglycol monoether or diethylene glycol monoether.

7. Polyurethane foam remover according to one of Claims 1 to 3 or 6, **characterised in that** the non-ionic surfactant for emulsification is polyoxyethylene glycerol oleoricinoleate with 20 molecules of ethylene oxide per molecule.

8. Polyurethane foam remover according to Claim 1 or 4 to 6, **characterised in that** ethylene glycol monomethyl ether or ethylene glycol monoethyl ether or ethylene glycol monobutyl ether is provided as ethylene glycol monoether.

9. Polyurethane foam remover according to one of the preceding claims, **characterised in that** the thickening agent is hydroxypropyl cellulose.

10. Use of a polyurethane foam remover according to one of Claims 1 to 3, 6, 7 or 9 for a substrate material of PVC, foil-coated PVC or eloxal, **characterised in that** the polyurethane foam remover contains a γ-lactone with a percentage by weight of 20 to 80%, a diethylene glycol ether or diglycol monoether or diacetone alcohol, a non-ionic surfactant for emulsification with a percentage by weight of 1 to 8% and a thickening agent to increase viscosity with a percentage by weight of 0.1 to 1%.

11. Use of a polyurethane foam remover according to Claim 10, **characterised in that** the polyurethane foam remover contains 58% γ-butyrolactone, 38% diethylene glycol monomethyl ether, 4% polyoxyethylene glycerol oleoricinoleate and 0.65% hydroxypropyl cellulose.

12. Use of a polyurethane foam remover according to one of Claims 1 to 3, 6, 7 or 9 for substrate materials of coated aluminium or eloxal, **characterised in that** the polyurethane foam remover contains a compound composed of a γ-lactone and methylamine with a percentage by weight of the compound of 20 to 80%, a diethylene glycol ether or diglycol monoether or diacetone alcohol, a non-ionic surfactant for emulsification with a percentage by weight of 1 to 8% and a thickening agent to increase viscosity with a percentage by weight of 0.1 to 1%.

13. Use of a polyurethane foam remover according to Claim 12, **characterised in that** the polyurethane foam remover contains 58 to 63% N-methylpyrrolidone, 38 to 33% diethylene glycol monomethyl ether, 4% polyoxyethylene glycerol oleoricinoleate and 0.65% hydroxypropyl cellulose.

14. Use of a polyurethane foam remover according to one of Claims 1, 4 to 6, 8 or 9 for substrate materials of coated aluminium, **characterised in that** the polyurethane foam remover contains an amino alcohol with a percentage by weight of 2 to 75%, a diethylene glycol monoether or ethylene glycol monoether and a thickening agent to increase viscosity with a percentage by weight of 0.1 to 1%.

15. Use of a polyurethane foam remover according to Claim 14, **characterised in that** the polyurethane foam remover contains 25% ethanolamine, 74.15% diethylene glycol monomethyl ether and 0.85% hydroxypropyl cellulose.

## Revendications

1. Décapant de mousse de polyuréthane pour différents matériaux de base,
**caractérisé en ce que** le décapant de mousse de polyuréthane se compose d'une γ-lactone présente selon une fraction en masse comprise entre 20 et 80 % et/ou d'un composé formé de la γ-lactone et de méthylamine présent selon une fraction en masse totale du composé comprise entre 20 et 80 %, et
d'un éther de diéthylèneglycol ou d'un monoéther de diglycol ou d'un diacétone-alcool et d'un tensioactif non ionique destiné à émulsionner, présent selon une fraction en masse comprise entre 1 et 8 %, et
d'un épaississant destiné à augmenter la viscosité, présent selon une fraction en masse comprise entre 0,1 et 1% ou
d'un amino-alcool présent selon une fraction en masse comprise entre 2 et 75 %, et d'un monoéther de diéthylèneglycol ou d'un monoéther d'éthylèneglycol et d'un épaississant permettant d'augmenter la viscosité présent selon une fraction en masse comprise entre 0,1 et 1 %.

2. Décapant de mousse de polyuréthane selon la revendication 1,
**caractérisé en ce que** l'on prévoit en tant que γ-lactone une γ-butyrolactone.

3. Décapant de mousse de polyuréthane selon la revendication 1 ou 2,
**caractérisé en ce que** le composé de γ-lactone et de méthylamine est la N-méthylpyrrolidone.

4. Décapant de mousse de polyuréthane selon la revendication 1,
**caractérisé en ce que** l'on prévoit en tant qu'amino-alcool une éthanolamine, une diglycolamine, une diéthanolamine ou du 2-(N-méthylamino)éthanol.

5. Décapant de mousse de polyuréthane selon la revendication 1,
**caractérisé en ce que** l'on prévoit en tant qu'amino-alcool l'isopropanolamine ou le 2-(2-amino-éthylamino)éthanol.

6. Décapant de mousse de polyuréthane selon l'une des revendications 1 à 5,
**caractérisé en ce que** l'on prévoit en tant que monoéther de diglycol ou monoéther de diéthylèneglycol, un monométhyléther de diéthylèneglycol ou un monoéthyléther de diéthylèneglycol ou un monopropyléther de diéthylèneglycol ou un monobutyléther de diéthylèneglycol.

7. Décapant de mousse de polyuréthane selon l'une des revendications 1 à 3 ou 6,
**caractérisé en ce que** le tensioactif non ionique destiné à émulsionner est un oléoricinoléate de polyoxyéthylèneglycérol comportant 20 molécules d'oxyde d'éthylène par molécule.

8. Décapant de mousse de polyuréthane selon la revendication 1 ou 4 à 6,
**caractérisé en ce que** l'on prévoit en tant que monoéther d'éthylèneglycol un monométhyléther d'éthylèneglycol ou un monoéthyléther d'éthylèneglycol ou un monobutyléther d'éthylèneglycol.

9. Décapant de mousse de polyuréthane selon l'une des revendications précédentes,
**caractérisé en ce que** l'épaississant est de l'hydroxypropylcellulose.

10. Utilisation d'un décapant de mousse de polyuréthane selon l'une des revendications 1 à 3, 6, 7 ou 9 pour un matériau de base en PVC, en PVC pelliplaqué ou en Eloxal,
**caractérisée en ce que** le décapant de mousse de polyuréthane contient une γ-lactone présente selon une fraction en masse comprise entre 20 et 80 %, un éther de diéthylèneglycol ou un monoéther de diglycol ou un diacétone-alcool, un tensioactif non ionique destiné à émulsionner présent selon une fraction en masse comprise entre 1 et 8 %, et un épaississant destiné à augmenter la viscosité présent selon une fraction en masse comprise entre 0,1 et 1 %.

11. Utilisation d'un décapant de mousse de polyuréthane selon la revendication 10,
**caractérisée en ce que** le décapant de mousse de polyuréthane contient 58 % de γ-butyrolactone, 38 % de monométhyléther de diéthylèneglycol, 4 % d'oléoricinoléate de polyoxyéthylèneglycérol et 0,65 % d'hydroxypropylcellulose.

12. Utilisation d'un décapant de mousse de polyuréthane selon l'une des revendications 1 à 3, 6, 7 ou 9 pour des matériaux de base en aluminium plaqué ou revêtu ou en Eloxal,
**caractérisée en ce que** le décapant de mousse de polyuréthane contient un composé d'une γ-lactone et de méthylamine présent selon une fraction en masse du composé comprise entre 20 et 80%, un éther de diéthylèneglycol ou un monoéther de diglycol ou un diacétone-alcool, un tensioactif non ionique destiné à émulsionner selon une fraction en masse comprise entre 1 et 8 %, et un épaississant destiné à augmenter la viscosité présent selon une fraction en masse comprise entre 0,1 et 1 %.

13. Utilisation d'un décapant de mousse de polyuréthane selon la revendication 12,
**caractérisée en ce que** le décapant de mousse de polyuréthane contient 58 à 63 % de N-méthylpyrrolidone, 33 à 38 % de monométhyléther de diéthylèneglycol, 4 % d'oléoricinoléate de polyoxyéthylèneglycérol et 0,65 % d'hydroxypropylcellulose.

14. Utilisation d'un décapant de mousse de polyuréthane selon l'une des revendications 1, 4 à 6, 8 ou 9 pour matériaux de base en aluminium plaqué ou revêtu,
**caractérisée en ce que** le décapant de mousse de polyuréthane contient un amino-alcool présent selon une fraction en masse comprise entre 2 et 75 %, un monoéther de diéthylèneglycol ou un monoéther d'éthylèneglycol et un épaississant destiné à augmenter la viscosité, présent selon une fraction en masse comprise entre 0,1 et 1 %.

15. Utilisation d'un décapant de mousse de polyuréthane selon la revendication 14,
**caractérisée en ce que** le décapant de mousse de polyuréthane contient 25 % d'éthanolamine, 74,15 % de monométhyléther de diéthylèneglycol et 0,85 % d'hydroxypropylcellulose.
